# EUROPEAN PATENT APPLICATION

(11) **EP 2 114 054 A1**
(43) Date of publication of application: **04.11.2009**
(21) Application number: 08008388.4
(22) Date of filing: 03.05.2008
(51) Int. Cl.: H04L 29/08, F02D 41/26, F02D 41/24

(54) **A method for monitoring the operation of actuators in internal combustion engines**

(71) Applicant: GM Global Technology Operations, Inc., Detroit, MI 48265-3000 (US)
(72) Inventor: Graglia, Riccardo, 13900 Biella (IT); Timoncin, Nicola, 48018 Faenza (RA) (IT); Avigliano, Alfonso, 84013 Cava dei Tirreni (SA) (IT)
(74) Representative: Kraenzmer, Martin

(57) **Abstract**

A method for monitoring the operation of an actuator (2) for an internal combustion engine (1) having an associated electronic control unit (ECU), the actuator (2) comprising a position sensor (3) and an embedded electronic circuit (18) arranged to provide a digital diagnostic information (106, d₁₂-d₁₅; 210) representative of actuator faults, and a position information indicative of the position detected by said sensor (3). The method is characterized by generating, by means of the embedded electronic circuit (18), a digital data packet (DP) comprising at least one first bit (102, 110; 208) representative of an actuator operating status, a first plurality of bits (106, d₀-d₁₁; 204, 206) representative of the position detected by the sensor (3) and a second plurality of bits (108; 214) for use for error checking. The method further comprises the step of acquiring and checking the digital data packet (DP) by means of the electronic control unit (ECU).

## Description

The present invention relates to a method for monitoring the operation of actuators in internal combustion engines according to the preamble of claim 1.

In conventional internal combustion engines there are several "smart" actuators, i.e. devices comprising an actuator and an embedded electronic circuit: the actuator is controlled by the embedded electronic circuit as a function of a control signal coming from a master controller of an electronic control unit (ECU) of the engine. Examples of said actuators are the swirl control valve, the EGR valve and the throttle valve. These smart actuators usually have a target position as a control input signal coming from the ECU. The embedded electronic circuit usually provides different feedback signals to the ECU. The feedback comprises both a diagnostic information about the actuator status and a current position value measured by a position sensor placed inside the actuator.

A smart actuator device needs therefore to send back to the ECU two information: a diagnostic message and a position feedback.

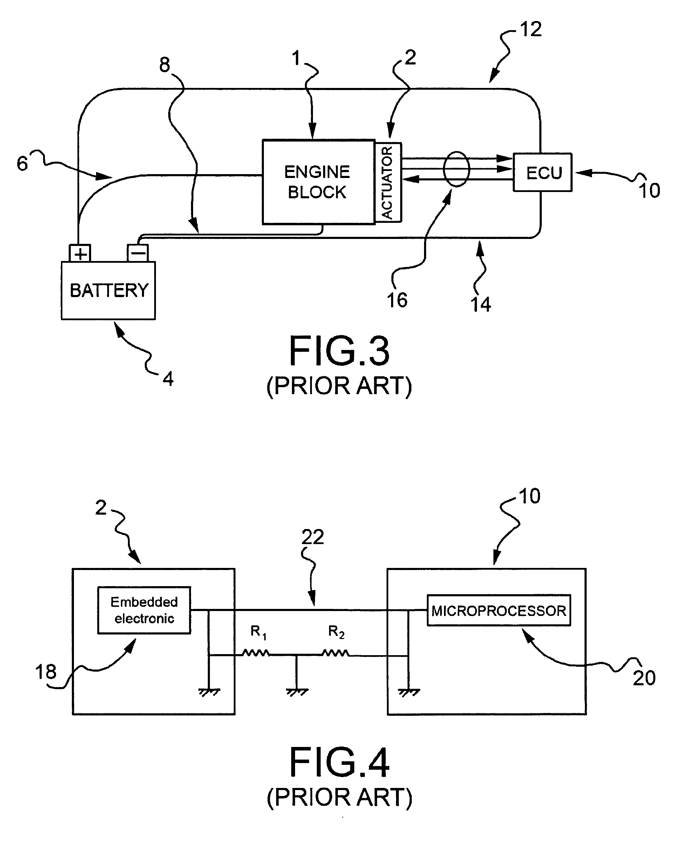

In figure 3 is diagrammatically shown a conventional arrangement including an engine block 1 provided with an actuator 2 and connected to a power source 4 (battery) through a power distribution wire 6 and a ground distribution wire 8 (system ground). An electronic control unit ECU 10 is also connected to the power source through respective power 12 and ground 14 distribution wires. Signals are exchanged between the ECU 10 and the actuator 2 via lines 16.

In figure 4 an electric equivalent diagram of electric connections of figure 3 is illustrated. The actuator 2 includes an embedded electronic circuit 18 which is connected to a microprocessor 20 of the ECU 10 through a signal connection 22 which represents the lines 16 by which signals are exchanged between the ECU 10 and the actuator 2. A first resistor R₁ and a second resistor R₂ represent the ground distribution wires 8 and 14 of the engine block 1 and the ECU 10, respectively.

The diagnostic message coming from the smart actuator is a code representative of different device faults. This information is usually coded as a digital signal; possible coding techniques for this signal include frequency modulation, PWM modulation and others. This solution requires a dedicated pin and consumes a digital input in the ECU 10.

The main drawbacks of the above-illustrated prior art are the following:
- the number of possible different faults is limited by the decoding capability of the ECU 10, so it is not possible to have a detailed description of what happened inside the actuator 2;
- only a fault status can be signaled to the ECU 10, while it's impossible to let the ECU 10 know about internal status during a normal operating condition of the actuator 2;
- the digital signals are referred to the system ground: the embedded electronic circuit 18 inside the actuator 2 is mechanically grounded to the engine block 1. The connection between engine block 1 and system ground distribution wire 8, preferably on the battery or the chassis, is provided by a cable, which provides ground return also for systems requiring high currents, like engine starter, glow plugs, generator, etc... These high currents could cause a significant voltage drop across the cable, resulting in a voltage shift between the ground distribution wire 8 of the actuator 2 and the ground distribution wire 14 of the ECU 10. These ground shifts are unacceptable with analog signals, thus requiring separated ground reference wires.

The position feedback signal provided by the "smart" actuators is usually transmitted as an analog signal. This solution requires three dedicated pins in the ECU, because an analog input requires a dedicated supply and ground return to avoid voltage shift problems.

The above described data transmission method thus requires four pins, i.e. one pin for the digital diagnostic message and the above-mentioned three pins for the position feedback signal, and occupies therefore one digital input and one analog input in the ECU 10 to transmit all the information of a single actuator.

The complexity of ECUs for automotive applications is steadily increasing, causing the number of required analog inputs to grow, while available analog input channels in the microprocessors remain limited.

In view of the above, it is an object of the present invention to provide an improved method for monitoring smart actuators that allows to limit the number of required wires and analog inputs for an engine ECU.

This and other objects are achieved according to the present invention by a method, the main features of which are defined in annexed claim 1.

Particular embodiments are the subject of the dependent claims, whose content is to be understood as integral or integrating part of the present description.

Further characteristics and advantages of the invention will become apparent from the following description, provided merely by way of a non-limiting example, with reference to the accompanying drawing, in which:
figure 1 shows an example of a data packet used in the method according to the invention;
figure 2 shows an example of a data packet used in a second embodiment of the method according to the invention;
figure 3, which has already been described, is a diagrammatic representation of engine electric connections of the prior art; and
figure 4 is an electric equivalent diagram of the electric connections of figure 3.

The present invention is applicable to detect faults in an actuator 2 which comprise a position sensor 3 and an embedded electronic circuit 18. The position sensor 3 detects a position of the actuator 2, for example, the opening position of a swirl or an EGR valve.

Briefly, the method according to the invention is based on the use of digital signals that are more tolerant to ground shifts than analog signals.

The SAE paper J2716 describe a generic protocol for unidirectional communication, specially designed for automotive application, called SENT (Single Edge Nibble Transmission). This protocol was published as a standard in April 2007. This protocol is a base for defining specific application implementations; in Appendix A of the mentioned SAE paper are reported several examples of application specific implementations of the SENT protocol.

In the present invention a data transmission method based on a specific implementation of the SENT protocol is proposed, so as to achieve the simultaneous transmission of both data and diagnostic information.

The SENT protocol is a unidirectional asynchronous data transmission method, able to send up to 1,000 data packets per second. An actuator sends a data packet towards an ECU which reads said packet and understands the operating conditions of the actuator.

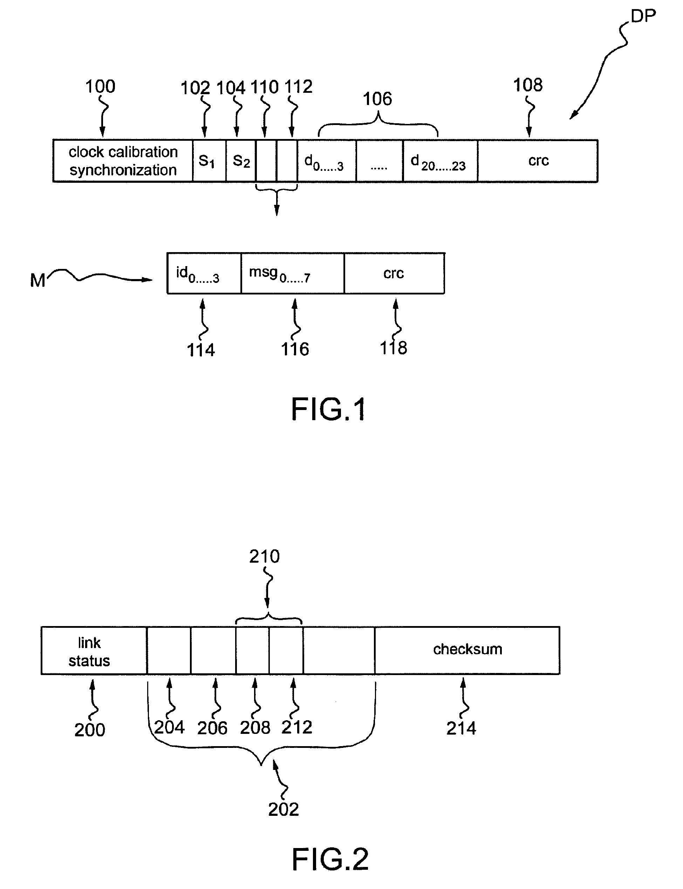

In figure 1 is shown an example of such a packet DP. A first pulse 100 of 56 clock ticks is used for the clock calibration and the synchronization of the packet DP, then two introductory bits 102 and 104 (s1, s2) are left free to be used for specific applications. Then, there are six nibbles 106 (24 bits, from do to d₂₃) which represent various data and at last there are four bits 108 which are used for error checking (crc). Two intermediate bits 110 and 112 are used for the transmission of a serial message; the bit 110 is a bit of a message as here below disclosed, the bit 112 is a stop bit.

In figure 1, M indicates a serial information message made up of two fields 114 and 116, respectively of four bits from id₀ to id₃ and eight bits from msg₀ to msg₇, plus an error field 118 made up of four bits which are used for error checking (crc).

As a whole, the serial message M is made up of sixteen bits. If the whole serial information message M is to be transmitted by means of a number of data packets DP, in particular using the intermediate bit 110, then sixteen data packets are needed to complete a transmission of the whole serial message M, so achieving a minimum transmission data rate of about 62 messages per second (considering a bit rate of 1000 bit per second).

According to the invention, the introductory bit 102 (s1) is used to indicate the actuator operating status, that is if the actuator is correctly working or not. Preferably, bit 102 is set at 0 when the actuator is correctly working, while it is set at 1 when a fault in the actuator is detected. The introductory bit 104 (s2) is used to indicate the position sensor status, that is if the position sensor of the actuator is correctly working, in particular it is set at 0 when the position sensor is correctly working while it is set at 1 when a fault in the position sensor is detected.

The first field 114 of the serial message M, i.e. the four bits from id₀ to id₃, is used to indicate if the actuator is correctly working or not, in particular it is set at 0 during the normal actuator operation, while it is set at 1 when there is a faulty condition, as illustrated in Table 1. This information is the same as the one coming from the introductory bit 102 (s1): the difference is that the bit 102 (s1) is updated each millisecond while the serial message M is updated more slowly. The repetition of the actuator status is needed to classify the data transmitted by the serial message.

**Table 1.**

| First field 114 | Description |
|---|---|
| 0 | Normal working status |
| 1 | Faulty status |

The second field 116 of the serial message M, i.e. the eight bits from msg₀ to msg₇, is used to report status codes of the actuator. An example is illustrated in Table 2.

**Table 2.**

| First field 114 | Second field 116 | Status description |
|---|---|---|
| 0 | 0 | Normal working status |
| | 1 | Cleaning procedure active |
| | 2 | Learning procedure active |
| 1 | 0 | No faults |
| | 1 | Over-temperature shut off |

The "cleaning active" and the "learning active" represent the conditions in which the actuator is performing a cleaning procedure or a learning procedure.

The first three nibbles of the group of six nibbles 106 of the data packet DP, i.e. the twelve bits from do to d₁₁, are used to transmit the position detected by the position sensor.

The forth nibble of the group of six nibbles 106 of the data packet DP, i.e. the four bits from d₁₂ to d₁₅, is used to transmit a fault code, when a fault is present. Preferably, when the actuator is correctly working, the actuator-embedded electronic circuit transmits a 0. When the actuator is not correctly working, a fault code taken from a predetermined fault table is transmitted. The fault table is created taking into account a priority assigned to each fault; if multiple faults are present in a given time instance, only the highest priority one is transmitted.

An example is provided in Table 3. Different faults are ordered according to their priority, from the most severe to the least one.

**Table 3.**

| Fault code | Fault description |
|---|---|
| 0 | No fault |
| 1 | Supply voltage not correct |
| 2 | Actuator damaged |
| 3 | Actuator stuck open |
| 4 | Actuator stuck closed |
| 5 | Actuator stuck in intermediate position |
| 6 | Wrong control signal |
| 7 | Position tracking error |

The fifth and sixth nibbles of the group of six nibbles 106 of the data packet DP, i.e. the bits from d₁₆ to d₂₃, are left unused for future needs.

The proposed method has many advantages:
- it requires only three wires, as required for a SENT communication channel, instead of four, as would be required by two separate signals (one digital signal and one analog signal);
- it requires only one digital input, eliminating the need of one analog input;
- the protocol allows the transmission of digitally coded position information with high precision and sample rate;
- there is room for defining a lot of fault conditions, much more than with the previously used transmission methods.
- this transmission is robust regarding transmission errors, thanks to the use of crc codes in each transmitted packet, as required by base SENT definition;
- it's possible to transmit separately device faults and status;
- using the SENT communication channel, possible future problems on diagnostic feedback due to ground shift will be avoided;
- in order to implement the method it is sufficient to add some functionality to the embedded electronic circuit which is present inside the actuators.

The above disclosed method is also applicable to a LIN protocol. This is a bidirectional protocol in which the ECU sends a "message header" packet towards an actuator, that is a data request signal through which the ECU asks the actuator to respond by sending back a "message response" packet containing data representative of the operating conditions of the actuator itself. In the LIN protocol are available up to 8 information bytes for a single "message response" packet, but only the bytes actually used are transmitted. The SAE paper J2602 specifies the structure and the content of said bytes.

In figure 2 is shown an example of such a "message response" packet. A first byte 200 is used for controlling the link status between the ECU and the actuator; then, seven data bytes 202 are available for transmitting data, information, etc... A checksum byte 214 is finally used for error checking.

According to the invention, only three of the seven data bytes 202 contain data related to the actuator: a first 204 and a second 206 byte contain the position detected by the position sensor of the actuator, first four bits 208 of a third byte 210 contain a status code and last four bits 212 of the third byte 210 contain a fault code.

Therefore, according to the invention, only bytes 200, 204, 206 and 210 are transmitted, plus, obviously, the checksum byte 214.

An example is provided in Tables 4 and 5. Different faults are ordered according to their priority, from the most severe to the least one.

**Table 4.**

| Status code | Status description |
|---|---|
| 0 | Normal working status |
| 1 | Cleaning procedure active |
| 2 | Learning procedure active |
| 3 | Over-temperature shut off |
| 4-15 | Reserved for future use |

**Table 5.**

| Fault code | Fault description |
|---|---|
| 0 | No fault |
| 1 | Supply voltage not correct |
| 2 | Actuator damaged |
| 3 | Actuator stuck open |
| 4 | Actuator stuck closed |
| 5 | Actuator stuck in intermediate position |
| 6 | Wrong control signal |
| 7 | Position tracking error |
| 8-15 | Reserved for future use |

Clearly, the principle of the invention remaining the same, the embodiments and the details of production can be varied considerably from what has been described and illustrated purely by way of non-limiting example, without departuring from the scope of protection of the present invention as defined by the attached claims.

## Claims

1. A method for monitoring the operation of an actuator (2) for an internal combustion engine (1) having an associated electronic control unit (ECU), the actuator (2) comprising a position sensor (3) and an embedded electronic circuit (18) arranged to provide a digital diagnostic information (106, d₁₂-d₁₅; 210) representative of actuator faults, and a position information indicative of the position detected by said sensor (3); the method being **characterized by**:
- generating, by means of said embedded electronic circuit (18), a digital data packet (DP) comprising:
at least one first bit (102, 110; 208) representative of an actuator operating status;
a first plurality of bits (106, d₀-d₁₁; 204, 206) representative of the position detected by said sensor (3); and
a second plurality of bits (108; 214) for use for error checking; and
- acquiring and checking said digital data packet (DP) by means of said electronic control unit (ECU).

2. The method of claim 1, wherein the electronic circuit (18) embedded in the actuator (2) generates a serial information message (M) comprising a first group (114, 116) of N bits representing the operating status of the actuator (2), wherein N is an integer greater than one, said electronic circuit (18) generating N successive digital data packets (DP), comprising each one information bit (110) which is set equal to a corresponding bit of said first group of bits (114, 116) of the serial information message (M).

3. The method of claim 2, wherein the electronic circuit (18) embedded in the actuator (2) generates a serial information message (M) in which said first group of bits (114, 116) comprises:
- a first field (114) of Q bits indicating whether the actuator (2) is working correctly or not, wherein Q is an integer less than N; and
- a second field (116) of R bits representing predetermined actuator operating status codes, wherein R is equal to the difference between N and Q.

4. The method of claim 2 or 3, wherein the electronic circuit (18) embedded in the actuator (2) generates a serial information message (M) further comprising a second group of P bits (118) for use for error checking, wherein P is an integer grater than one; said electronic circuit (18) generating further P successive digital data packets (DP) comprising each one information bit (110) which is set equal to a corresponding bit of the second group of bits (118) of the serial information message (M).
